# EUROPÄISCHE PATENTSCHRIFT

(11) **EP 2 643 738 B1**
(45) Veröffentlichungstag und Bekanntmachung des Hinweises auf die Patenterteilung: **03.07.2019**
(21) Anmeldenummer: 11778534.5
(22) Anmeldetag: 31.10.2011
(51) Int. Cl.: G05B 19/418, H04L 29/12

(54) **ROBOTERSYSTEM MIT EINEM ROBOTER UND ZWEI WECHSELWEISE MIT DIESEM VERBINDBAREN EINRICHTUNGEN SOWIE VERFAHREN ZUM WECHSELN DIESER EINRICHTUNGEN**
ROBOT SYSTEM COMPRISING A ROBOT AND TWO DEVICES THAT CAN BE CONNECTED TO SAID ROBOT IN AN ALTERNATING MANNER, AND METHOD FOR CHANGING SAID DEVICES
SYSTÈME ROBOTISÉ DOTÉ D'UN ROBOT ET DE DEUX DISPOSITIFS POUVANT ALTERNATIVEMENT ÊTRE RELIÉS À CE DERNIER, AINSI QUE PROCÉDÉ PERMETTANT D'ASSURER L'ALTERNANCE DESDITS DISPOSITIFS

(30) Priorität: 24.11.2010 DE 102010052394
(43) Veröffentlichungstag der Anmeldung: 02.10.2013
(73) Patentinhaber: KUKA Deutschland GmbH, 86165 Augsburg (DE)
(72) Erfinder: ZURBAU, Ovidiu, 86199 Augsburg (DE)
(74) Vertreter: Schlotter, Alexander Carolus Paul
(86) Internationale Anmeldenummer: PCT/EP2011/005499
(87) Internationale Veröffentlichungsnummer: WO 2012/069131

(56) Entgegenhaltungen:
- DE-T2- 60 032 263
- US-A1- 2007 291 704
- Martin A. Brown: "Guide to IP Layer Network Administration with Linux Version 0.4.4", Internet Article, 26. April 2003 (2003-04-26), Seiten 1-179, XP002669956, Internet Gefunden im Internet: URL:http://linux-ip.net/linux-ip.pdf [gefunden am 2012-02-20]

## Beschreibung

Die vorliegende Erfindung betrifft ein Robotersystem mit einem Roboter und zwei Einrichtungen, die wechselweise mit diesem verbindbar sind, ein Verfahren zum Wechseln von mit einem Roboter verbundenen Einrichtungen sowie ein Computerprogrammprodukt mit einem Programm zur Durchführung eines solchen Verfahrens.

Bei Robotersystemen mit einem oder mehreren Robotern ist in der industriellen Praxis häufig ein Werkzeugwechsel erforderlich, beispielsweise der Austausch verschiedener Greifer mit unterschiedlicher Geometrie, Kinematik oder dergleichen.

Nach betriebsinterner Praxis kommuniziert eine Roboterapplikation, die insbesondere Bewegungsbefehle, beispielsweise "Greifer öffnen/schließen", und Wechselbefehle, zum Beispiel "Wechsel Greifer 1 gegen Greifer 2", abarbeiten kann, mit den einzelnen Werkzeugen über ein PROFINET IO Netzwerk, wie es beispielsweise in der Norm IEC 61158 und IEC 61784.2 definiert ist.

Nach bisheriger betriebsinterner Praxis werden dabei die einzelnen Werkzeuge alle parallel als eigene PROFINET Devices bzw. Slaves konfiguriert, denen jeweils eigene IP-Adressen und eigene Namen zugewiesen sind. Nachteilig müssen hierzu entsprechend viele Ein- und Ausgänge vorgesehen werden, die sich mit jedem zusätzlichen Wechselwerkzeug erhöhen und so den Konfigurations- und Datenaufwand erhöhen. Wenn in einem Beispiel 64 Ein-/Ausgänge für ein Werkzeug vorgesehen sind, erfordern bereits drei gegeneinander auswechselbare Werkzeuge 192 Ein-/Ausgänge und die Konfiguration von drei unterschiedlichen PROFINET Devices.

Eine denkbare Lösung besteht darin, in der Kommunikation, insbesondere für den PROFINET Controller bzw. Master, nur eine PROFINET Device für die unterschiedlichen, gegeneinander auswechselbaren Werkzeuge vorzusehen, und deren PROFINET Devices mit der gleichen IP-Adresse und dem gleichen Namen zu konfigurieren. Der Konfigurations- und Datenaufwand reduziert sich entsprechend.

Wird nun beispielsweise ein Greifer 1 durch einen Greifer 2 ausgewechselt, haben die beiden zugehörigen PROFINET Devices die gleiche IP-Adresse und den gleichen Namen, jedoch unterschiedliche gerätespezifische MAC-Kennungen, die in der Regel vom Hersteller eineindeutig bzw. einzigartig vergeben worden sind.

Während der Arbeit mit Greifer 1 war entsprechend in einer ARP-Tabelle dessen MAC-Kennung der IP-Adresse zugeordnet und die Roboterapplikation konnte mittels des PROFINET Controllers über diese IP-Adresse den angekoppelten Greifer 1 mit seiner MAC-Kennung ansprechen.

Ist dann statt Greifer 1 nun Greifer 2 angekoppelt, stimmt dessen MAC-Kennung nicht mehr mit dem ARP-Eintrag überein. Pakete, die der PROFINET Controller an die IP-Adresse sendet, gehen entsprechend verloren.

Dies wird vom PROFINET Controller aufgrund eines Time-outs nach einer gewissen Zeit erkannt, der daraufhin eine ARP-Anfrage absendet und die Kommunikation mit der PROFINET Device des angekoppelten Greifers 2 aufbaut, wobei dessen MAC-Kennung mit derselben IP-Adresse in die ARP-Tabelle eingetragen wird. Neben dem Problem, dass Pakete verloren gehen, vergeht hier jedoch relativ viel Zeit, in der Praxis beispielsweise 1 bis 2 Sekunden, bis aufgrund des Time-outs eine ARP-Anfrage abgesendet wird, woraufhin die neue Kommunikation aufgebaut wird. Dies ist, insbesondere bei häufigen Werkzeugwechseln in der industriellen Automatisierung, unerwünscht, da es den Prozess verlangsamt.

In der EP 1 307 823 B1 wird vorgeschlagen, dass ein Ersatzgerät für ein fehlerhaftes Gerät eine BOOTP-Anfrage ausgibt, woraufhin ein Monitoragent dem Ersatzgerät die IP-Adresse des fehlerhaften Gerätes erteilt, falls er feststellt, dass die Port-Adressen beider Geräte übereinstimmen.

Die US 2007/291704 A1 betrifft ein Verfahren und ein System zur Übernahme einer IP-Adresse von einem Netzwerkanschluss zu einem anderen Netzwerkanschluss innerhalb eines LANs. Das System übernimmt die IP-Adressen in einem Server, der mit einer Mehrzahl von Klienten verbunden ist und eine Mehrzahl von Netzwerk-Schnittstellen-Karten aufweist, und aktualisiert automatisch die MAC-Adressen, die in den ARP-Caches der Klienten gespeichert sind und den IP-Adressen des Servers entsprechen, um die Kontinuität der Kommunikation zwischen den Klienten und dem Server und die Zuverlässigkeit des Servers zu verbessern.

Martin A. Brown: "Guide to IP Layer Network Administration with Linux Version 0.4.4" (http://linux-ip.net/linux-ip.pdf) betrifft ein Handbuch zur Administration eines IP-Netzwerks, welches unter Linux betrieben wird. Ziel ist es, einen Überblick sowie Detailinformationen für linux-spezifische IP-Netzwerk-Werkzeuge bereitzustellen.

Die DE 600 32 263 T2 betrifft ein Verfahren zur Festlegung einer kanonischen Adresse für eine Vielzahl von vernetzten Geräten, umfassend folgende Schritte: Bereithalten einer Liste von Internetprotokolladressen für jedes der Vielzahl von vernetzten Geräten an einem Monitoragenten; und Verarbeiten der kanonischen Adresse für jedes der Vielzahl von vernetzten Geräten, wobei die korrekte IP-Adresse für die vernetzten Geräte durch den Monitoragenten festgelegt wird, durch: Empfangen einer Anfrage von einem Zielgerät im Netzwerk, zu einer IP Adresse zugeordnet zu werden, wobei die Anfrage eine dem Zielgerät zugeordnete MAC-Adresse enthält; Ausgeben einer Anfrage an einen oder mehrere gemanagte Netzwerkschalter im Netzwerk, wobei jeder gemanagte Netzwerkschalter eine Vielzahl von Ports aufweist, und wobei jede Anfrage die MAC-Adresse spezifiziert und anfordert, dass der angefragte gemanagte Netzwerkschalter die Nummer eines jeden Ports angibt, an dem Daten von dem Zielgerät mit der spezifizierten MAC-Adresse empfangen worden sind; Empfangen der Antworten auf eine oder mehrere der Anfragen; und bei Feststellung, dass einer der angefragten gemanagten Netzwerkschalter und die Portnummer, die durch diesen Schalter berichtet worden ist, mit einer individuellen bekannten IP-Adresse verknüpft ist, Zuweisen dieser bekannten IP-Adresse an das Zielgerät; und bei Feststellung, dass die Anzahl möglicher IP-Adressen, welche ein aktuell nicht in Betrieb befindliches vernetztes Gerät repräsentieren, kleiner ist als eins oder größer ist als eins, Nichtzuweisen einer IP-Adresse an das Zielgerät.

Aufgabe der vorliegenden Erfindung ist es, den Wechsel von wahlweise mit einem Roboter verbindbaren Einrichtungen zu verbessern.

Diese Aufgabe wird durch ein Verfahren nach Anspruch 1 gelöst. Anspruch 7 stellt ein Robotersystem unter Schutz, das zur Durchführung eines erfindungsgemäßen Verfahrens eingerichtet ist, Anspruch 8 ein Computerprogrammprodukt, insbesondere einen maschinenlesbaren Datenträger bzw. ein Speichermedium, mit einem Programm zur Durchführung eines erfindungsgemäßen Verfahrens. Die Unteransprüche betreffen vorteilhafte Weiterbildungen.

Ein Robotersystem umfasst einen oder mehrere Roboter. Für wenigstens einen dieser Roboter sind zwei oder mehr Einrichtungen vorgesehen, die wechselweise mit diesem verbindbar sind. Eine Einrichtung weist vorzugsweise ein Netzwerkkommunikationsmittel, insbesondere ein Feldgerät, zur Anbindung an ein Kommunikationsmittel, insbesondere ein Netzwerk, vorzugsweise ein PROFINET Netzwerk, bevorzugt ein PROFINET IO Netzwerk, sowie ein oder mehrere Werkzeuge, beispielsweise einen Greifer, und/oder ein oder mehrere sonstige Peripheriegeräte auf. Bei einem PROFINET (IO) Netzwerk weist das Netzwerkkommunikationsmittel eine sogenannte PROFINET (IO) Device bzw. einen PROFINET (IO) Slave auf.

Das Robotersystem umfasst weiterhin eine Roboterapplikation, beispielsweise eine System- oder Robotersteuerung und/oder ein durch diese abgearbeitetes Programm. Die Roboterapplikation gibt Befehle für die Einrichtung, insbesondere an eine Steuerung wenigstens eines Werkzeugs und/oder sonstigen Peripheriegeräts der Einrichtung, aus, insbesondere Aktions- und/oder Bewegungsbefehle wie "Greifer öffnen/schließen", "Haltemagnet/Schweißstrom/Lackausgabe aktivieren/deaktivieren" oder dergleichen, und/oder Einrichtungswechselbefehle wie "Abkoppeln von Einrichtung 1", "Ankoppeln von Einrichtung 2" und dergleichen. Die Roboterapplikation kommuniziert mit der Einrichtung, insbesondere ihrer Steuerung, vorzugsweise über ein Netzwerk, wobei ein Netzwerk-Master vorgesehen ist, der Befehle der Roboterapplikation an den entsprechenden Netzwerk-Slave der Einrichtungen übermittelt, der diese seinerseits vorzugsweise an eine Steuerung der Einrichtung übermittelt. Bei einem PROFINET (IO) Netzwerk weist der Netzwerk-Master einen PROFINET (IO) Controller bzw. Master auf.

Gemäß der vorliegenden Erfindung wird, insbesondere durch den Netzwerk-Master, eine Trennung einer Kommunikation mit einer ersten Einrichtung erfasst. Hierzu kann der Master beispielsweise eine Watchdog-Funktionalität zur Überwachung der Kommunikation mit dem Slave durchführen, indem er beispielsweise zyklisch das Vorhandensein eines Anwesenheitssignals überprüft. In einer bevorzugten Ausführung gibt ein Stack bei Erfassen einer Trennung bzw. einer Abwesenheit des Slaves eine call-back Information an einen Treiber aus.

Erfindungsgemäß wird daraufhin ein Adresseintrag für die erste Einrichtung aus einem Kommunikationsverzeichnis entfernt. In dem Kommunikationsverzeichnis sind vorzugsweise ein oder mehrere Kommunikationskennungen und eine einrichtungsspezifische, vorzugsweise einer Einrichtung eineindeutig zugeordnete bzw. einzigartige Kennung, einander eineindeutig zugeordnet. Eine Kommunikationskennung wird einer Einrichtung vorzugsweise bei einer Konfiguration des Systems bzw. Netzwerks, insbesondere eine Konfiguration des Slaves, zugewiesen. In einer bevorzugten Ausführung sind verschiedenen, wechselweise mit dem Roboter verbindbaren Einrichtungen, die unterschiedliche spezifische Kennungen aufweisen, identische Kommunikationskennungen zugewiesen.

Das Kommunikationsverzeichnis kann insbesondere ein ARP-Verzeichnis bzw. eine ARP-Tabelle aufweisen bzw. sein, wobei ARP insbesondere für "Address Resolution Protocol" steht. Eine spezifische bzw. einzigartige Kennung kann insbesondere eine physikalische Adresse, vorzugsweise eine MAC-Kennung bzw. MAC-Adresse sein, wobei MAC insbesondere für "Medium Access Control" steht. Eine Kommunikationskennung kann insbesondere eine IP-Adresse und/oder ein Name sein, wobei IP insbesondere für "Internet Protocoll" steht.

Erfindungsgemäß wird der Adresseintrag für die erste Einrichtung aus dem Kommunikationsverzeichnis entfernt, sobald eine Trennung der Kommunikation mit der ersten Einrichtung erfasst worden ist. Wird nun eine Kommunikation mit einer zweiten Einrichtung aufgebaut, wird aufgrund des fehlenden Adresseintrags unverzüglich ein Adresseintrag für die zweite Einrichtung in dem Kommunikationsverzeichnis erstellt, vorzugsweise, indem eine ARP-Anfrage gesendet wird.

Damit muss nicht mehr gewartet werden, bis beispielsweise eine ARP-Abfrage ausgesandt und auf deren Basis der ARP-Eintrag vorgenommen wird, ein Netzwerk-Master erkennt vielmehr anhand des fehlenden ARP-Eintrags bei Anmeldung eines neuen Slaves sofort die Notwendigkeit einer ARP-Abfrage. Auch gehen keine Pakete mehr verloren, die mit einer IP-Adresse an einen nicht mehr vorhandenen Slave gesendet werden, da aufgrund des fehlenden ARP-Eintrags diese Pakete nicht mehr abgesandt werden. In Tests hat sich gezeigt, dass aufgrund der erfindungsgemäßen Entfernung des Adresseintrags für die entfernte Einrichtung der Einrichtungswechsel deutlich schneller erfolgen kann, vorteilhafterweise innerhalb eines FSU ("Fast Start Up") Zeitrahmens.

Hierzu kann insbesondere der Aufbau der Kommunikation mit der zweiten Einrichtung in einem Schnellhochlauf, insbesondere einem Fast Start Up, erfolgen, bevorzugt in höchstens 0,75 Sekunden, insbesondere in höchstens 0,55 Sekunden. Ein PROFINET Fast Start Up umfasst vorzugsweise einen sogenannten Hello-Request des neu angeschlossenen zweiten PROFINET Slaves sowie eine anschließende wechselweise Kommunikation zwischen PROFINET Master und Slave mit einem sogenannten Connect-Request bzw. -Response.

Bevorzugt ist vorgesehen, dass der Adresseintrag für die erste Einrichtung aus dem Kommunikationsverzeichnis entfernt wird, bevor die Kommunikation mit der zweiten Einrichtung aufgebaut wird, um bei Verbinden mit der zweiten Einrichtung aufgrund des fehlenden Adresseintrags unverzüglich mit dem Kommunikationsaufbau und dem Erstellen des Adresseintrags für die zweite Einrichtung zu beginnen. Insbesondere ist vorzugsweise vorgesehen, dass der Adresseintrag für die erste Einrichtung aus dem Kommunikationsverzeichnis entfernt wird, sobald eine Trennung der Kommunikation mit der ersten Einrichtung erfasst worden ist.

Eine Trennung der ersten Einrichtung kann - für einen Wechsel der Einrichtung - gewollt erfolgen. Daneben kann beispielsweise auch ein ungewollter Verlust der Einrichtung zu einer Trennung der Kommunikation führen, die beispielsweise durch einen Netzwerk-Master erkannt werden soll, der dann einen Time-out für die weiterhin in dem Kommunikationsverzeichnis vorhandene Kommunikationsadresse feststellt. Daher ist in einer bevorzugten Ausführung vorgesehen, dass ein Einrichtungswechselbefehl der Roboterapplikation erfasst und der Adresseintrag für die erste Einrichtung aus dem Kommunikationsverzeichnis nur dann entfernt wird, falls ein Einrichtungswechselbefehl der Roboterapplikation und die Trennung der Kommunikation mit der ersten Einrichtung erfasst worden ist.

Die Kommunikation und die erste und zweite Einrichtung können in einer bevorzugten Ausführung vorab konfiguriert werden. Insbesondere können ein Netzwerk sowie ein zugehöriger Master und die Slaves konfiguriert werden, wobei vorzugsweise unterschiedliche, wechselweise verbindbare Einrichtungen dieselben Kommunikationsadressen, insbesondere Namen und/oder IP-Adressen, zugewiesen bekommen, so dass die Roboterapplikation bzw. der Master die jeweils verbundene Einrichtung stets unter derselben IP-Adresse ansprechen kann.

Weitere Vorteile und Merkmale ergeben sich aus den Unteransprüchen und den Ausführungsbeispielen. Hierzu zeigt, teilweise schematisiert:
- Fig. 1:: einen Roboter und zwei Werkzeuge eines Robotersystems nach einer Ausführung der vorliegenden Erfindung;
- Fig. 2:: eine Roboterapplikation, einen PROFINET IO Master und zwei PROFINET IO Slaves des Robotersystems der Fig. 1; und
- Fig. 3:: von oben nach unten den Ablauf eines Verfahrens nach einer Ausführung der vorliegenden Erfindung zum Wechseln des einen gegen das andere Werkzeug des Robotersystems der Fig. 1.

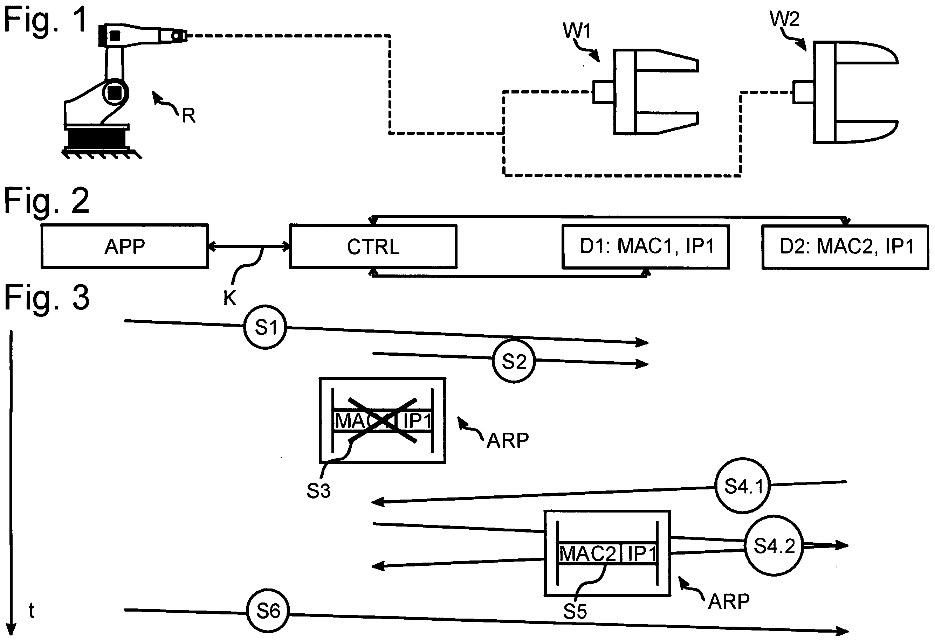

Fig. 1 zeigt einen Industrieroboter R, an dem alternativ ein Werkzeug W1 oder ein hiervon verschiedenes Werkzeug W2 befestigt werden soll, um unterschiedliche Teilaufgaben eines Automatisierungsprozesses, beispielsweise einer Montage, durchzuführen.

Fig. 2 zeigt hierzu ein PROFINET IO Netzwerk K, über das eine Roboterapplikation APP das Werkzeug W1 bzw. W2 ansteuert. Die Werkzeuge W1, W2 bilden zusammen mit einer jeweiligen PROFINET IO Device D1 bzw. D2 bzw. einem PROFINET IO Feldgerät bzw. Slave jeweils eine Einrichtung (W1, D1) bzw. (W2, D2).

Bei der Konfiguration des PROFINET IO Netzwerks wurde dem Slave D1 mit der spezifischen bzw. einzigartigen, beispielsweise vom Hersteller in einem ROM einer Netzwerkkarte fest vorgegebenen MAC-Adresse "MAC1" eine IP-Adresse "IP1" zugewiesen. Dem Slave D2 mit der entsprechenden MAC-Adresse "MAC2" wurde dieselbe IP-Adresse "IP1" zugewiesen, da beide Werkzeuge W1, W2 wechselweise eingesetzt und von der Roboterapplikation APP einheitlich angesprochen werden sollen. Weiterhin ist in dem Netzwerk Kein PROFINET IO Controller bzw. Master CTRL mit einem Treiber und einem Stack (nicht dargestellt) vorgesehen, der insbesondere Befehle von der Roboterapplikation APP über den zugehörigen Slave D1 bzw. D2 an das jeweilige Werkzeug W1 bzw. W2 übermittelt.

Zu einem Werkzeugwechsel vom Werkzeug W1 auf das Werkzeug W2 gibt zunächst die Roboterapplikation APP einen Einrichtungswechselbefehl S1 aus, wie in Fig. 3 dargestellt, die von oben nach unten den zeitlichen Verfahrensablauf andeutet.

Der Roboter R verfährt hierzu in eine Ablagepose (nicht dargestellt), in der das Werkzeug W1 physikalisch vom Roboter R getrennt wird. Die damit einhergehende Trennung der Kommunikation mit dem zugehörigen Slave D1 erfasst der Master CTRL beispielsweise durch eine entsprechende Watchdog-Abfrage S2.

Da vorab ein entsprechender Einrichtungswechselbefehl S1 erfasst worden ist, erkennt der Master CTRL, dass die beabsichtigte Trennung erfolgt ist, und löscht unverzüglich den entsprechenden Adresseintrag in einer ARP-Tabelle, in der die Zuordnung der spezifischen MAC-Adresse "MAC1" der Einrichtung (W1, D1) der Kommunikationsadresse "IP1" zum Ansprechen des mit dem Roboter verbundenen Werkzeugs nach dem anfänglichen Kommunikationsaufbau (nicht dargestellt) mit der Slave D1 abgelegt worden ist. Die Löschung ist in Fig. 3 durch ein Auskreuzen angedeutet (Fig. 3: "S3").

Nun wird die zweite Einrichtung mit dem Roboter verbunden, indem das Werkzeug W2 physikalisch an diesem befestigt und sein Slave D2 mit dem Netzwerk K verbunden wird. Dieser sendet daraufhin einen Hello-Request an den Master CTRL (Fig. 3: "S4.1").

Aufgrund der erfindungsgemäßen Löschung des Adresseintrags "MAC1|IP1" infolge der Trennung der ersten Einrichtung (W1, D1) sendet der Master CTRL unverzüglich, ohne einen Time-out abwarten zu müssen, einen ARP-Request und baut so die Kommunikation mit dem neuen Slave D2 auf. Dieser Kommunikationsaufbau mit dem anfänglichen Hello-Request S4.1 und anschließenden nicht differenziert dargestellten Requests und Responses S4.2 erfolgt als PROFINET IO Fast Start Up innerhalb von etwa 0,5 Sekunden. Dabei wird insbesondere in der ARP-Tabelle ARP ein Adresseintrag "MAC2|IP1" vorgenommen, der die spezifische MAC-Adresse "MAC2" des Slaves D2 und die IP-Adresse "IP1" einander zuordnet, unter der die Roboterapplikation APP bzw. der Master CTRL das angebundene Werkzeug ansprechen.

Nun kann die Roboterapplikation APP Befehle an das neue Werkzeug W2 senden (Fig. 3: "S6"), beispielsweise "Greifer öffnen" oder dergleichen.

Bei einem erneuten Werkzeugwechsel, beispielsweise zurück auf das Werkzeug 1 oder ein nicht dargestelltes weiteres Werkzeug, wird analog ein Einrichtungswechselbefehl ausgeführt, die Trennung der Kommunikation erfasst, daraufhin der ARP-Eintrag gelöscht, die Kommunikation mit dem neuen Slave in einem Fast Start Up aufgebaut und dabei dessen MAC- und IP-Adresse in der ARP-Tabelle hinterlegt.

Wie dargestellt, kann der Werkzeugwechsel schneller, in den Zeitvorgaben eines Fast Start Ups, erfolgen, ohne dass Pakete verloren gehen, da der Master CTRL bzw. dessen TCP/IP Stack (nicht einzeln dargestellt) durch den bewusst entfernten und somit fehlenden ARP-Eintrag für diese IP-Adresse gezwungen wird, eine ARP-Anfrage zu senden, bevor Pakete an diese IP-Adresse gesendet werden. Somit steht stets nur eine aktuell vorhandene MAC-Adresse in der ARP-Tabelle.

### Bezugszeichenliste

- APP: Roboterapplikation
- ARP: ARP-Tabelle (Kommunikationsverzeichnis)
- CTRL: Netzwerk-(PROFINET IO) Master
- D1, D2: Feldgerät (PROFINET IO Device)
- IP1: IP-Adresse (Kommunikationskennung)
- MAC1,:
- MAC2: MAC-Adresse (spezifische Kennung)
- R: Roboter
- S1,...S6: Verfahrensschritte
- t: Zeit (Verfahrensablauf)
- W1, W2: Werkzeug

## Patentansprüche

1. Verfahren zum Wechseln mit einem Roboter (R) verbundener Einrichtungen (W1, D1; W2, D2), die mit einer Roboterapplikation (APP) kommunizieren, mit den Schritten:
S2: Erfassen einer Trennung einer Kommunikation mit einer ersten Einrichtung (W1, D1);
S3: Entfernen eines Adresseintrags ("MAC1|IP1") für die erste Einrichtung aus einem Kommunikationsverzeichnis (ARP);
S4: Aufbau einer Kommunikation mit einer zweiten Einrichtung (W2, D2); und
S5: Erstellen eines Adresseintrags ("MAC2|IP1") für die zweite Einrichtung in dem Kommunikationsverzeichnis,
wobei ein Einrichtungswechselbefehl der Roboterapplikation erfasst wird (S1) und der Adresseintrag für die erste Einrichtung aus dem Kommunikationsverzeichnis entfernt wird, wenn ein Einrichtungswechselbefehl der Roboterapplikation und die Trennung der Kommunikation mit der ersten Einrichtung erfasst worden sind.

2. Verfahren nach Anspruch 1, **dadurch gekennzeichnet, dass** die Kommunikation über ein PROFINET-Netzwerk, insbesondere ein PROFINET IO Netzwerk, erfolgt.

3. Verfahren nach einem der vorhergehenden Ansprüche, **dadurch gekennzeichnet, dass** der Aufbau der Kommunikation mit der zweiten Einrichtung in einem Schnellhochlauf, insbesondere einem Fast Start Up, erfolgt.

4. Verfahren nach Anspruch 3, **dadurch gekennzeichnet, dass** der Aufbau der Kommunikation mit der zweiten Einrichtung in höchstens 0,75 Sekunden, insbesondere in höchstens 0,55 Sekunden erfolgt.

5. Verfahren nach einem der vorhergehenden Ansprüche, **dadurch gekennzeichnet, dass** die erste und die zweite Einrichtung unterschiedliche spezifische Kennungen (MAC1, MAC2) und identische Kommunikationskennungen (IP1) aufweisen.

6. Verfahren nach einem der vorhergehenden Ansprüche, **dadurch gekennzeichnet, dass** die Kommunikation und die erste und zweite Einrichtung vorab konfiguriert werden.

7. Robotersystem mit wenigstens einem Roboter (R), wenigstens zwei wechselweise mit diesem verbindbaren Einrichtungen (W1, D1; W2, D2), einer Roboterapplikation (APP), und einem Kommunikationsmittel (K), **dadurch gekennzeichnet, dass** das System zur Durchführung eines Verfahrens nach einem der vorhergehenden Ansprüche eingerichtet ist.

8. Computerprogrammprodukt mit einem Programm, welches ein Verfahren nach einem der vorhergehenden Ansprüche 1 bis 6 ausführt, wenn es in einem Robotersystem nach Anspruch 7 abläuft.

## Claims

1. A method of exchanging devices (W1, D1; W2, D2) which are connected to a robot (R) and which communicate with a robot application (APP), comprising the steps of:
S2: detecting an interruption in a communication with a first device (W1, D1);
S3: removing an address entry ("MAC1|IP1") for the first device from a communication directory (ARP);
S4: establishing communication with a second device (W2, D2); and
S5: creating an address entry ("MAC2|IP1") for the second device in the communication directory,
wherein a device change command of the robot application is detected (S1) and the address entry for the first device is removed from the communication directory when a device change command of the robot application and the interruption in the communication with the first device have been detected.

2. The method according to claim 1, **characterised in that** the communication takes place via a PROFINET network, in particular a PROFINET IO network.

3. The method according to any one of the preceding claims, **characterised in that** the establishment of the communication with the second device takes place in a fast start up, in particular a Fast Start Up.

4. The method according to claim 3, **characterised in that** the establishment of the communication with the second device takes place within at most 0.75 seconds, in particular within at most 0.55 seconds.

5. The method according to any one of the preceding claims, **characterised in that** the first device and the second device have different specific identifiers (MAC1, MAC2) and identical communication identifiers (IP1).

6. The method according to any one of the preceding claims, **characterised in that** the communication and the first and second devices are configured in advance.

7. A robot system comprising at least one robot (R), at least two devices (W1, D1; W2, D2) that can be alternately connected thereto, a robot application (APP) and a communication means (K), **characterised in that** the system is arranged to carry out a method according to any one of the preceding claims.

8. A computer program product comprising a program which executes a method according to any one of the preceding claims 1 to 6 when it is run on a robot system according to claim 7.

## Revendications

1. Procédé d'alternance de dispositifs (W1, D1 ; W2, D2) reliés à un robot (R), qui communiquent avec une application de robot (APP), avec les étapes de :
S2 : détection d'une interruption d'une communication avec un premier dispositif (W1, D1) ;
S3 : suppression d'une entrée adresse (« MAC1|IP1 ») pour le premier dispositif d'un répertoire de communication (ARP) ;
S4 : établissement d'une communication avec un deuxième dispositif (W2, D2) ; et
S5 : création d'une entrée adresse (« MAC2|IP1 ») pour le deuxième dispositif dans le répertoire de communication,
dans lequel un ordre d'alternance de dispositif de l'application de robot est détecté (S1) et l'entrée adresse pour le premier dispositif est supprimée du répertoire de communication, lorsqu'un ordre d'alternance de dispositif de l'application de robot et l'interruption de la communication avec le premier disposition ont été détectés.

2. Procédé selon la revendication 1, **caractérisé en ce que** la communication a lieu par le biais d'un réseau PROFINET, en particulier un réseau PROFINET IO.

3. Procédé selon l'une quelconque des revendications précédentes, **caractérisé en ce que** l'établissement de la communication avec le deuxième dispositif a lieu dans un démarrage rapide, en particulier un Fast Start Up.

4. Procédé selon la revendication 3, **caractérisé en ce que** l'établissement de la communication avec le deuxième dispositif a lieu en maximum 0,75 seconde, en particulier en maximum 0,55 seconde.

5. Procédé selon l'une quelconque des revendications précédentes, **caractérisé en ce que** le premier et le deuxième dispositif présentent différents identifiants spécifiques (MAC1, MAC2) et des identifiants de communication identiques (IP1).

6. Procédé selon l'une quelconque des revendications précédentes, **caractérisé en ce que** la communication et le premier et deuxième dispositif sont configurés au préalable.

7. Système robotisé avec au moins un robot (R), au moins deux dispositifs (W1, D1 ; W2, D2) pouvant être reliés alternativement à celui-ci, une application de robot (APP), et un moyen de communication (K), **caractérisé en ce que** le système est aménagé pour la réalisation d'un procédé selon l'une quelconque des revendications précédentes.

8. Produit de programme informatique avec un programme, lequel exécute un procédé selon l'une quelconque des revendications précédentes 1 à 6, lorsqu'il se déroule dans un système robotisé selon la revendication 7.
